# EUROPÄISCHE PATENTSCHRIFT

(11) **EP 1 272 923 B1**
(45) Veröffentlichungstag und Bekanntmachung des Hinweises auf die Patenterteilung: **30.06.2004**
(21) Anmeldenummer: 01936222.7
(22) Anmeldetag: 10.04.2001
(51) Int. Cl.: G06F 3/12

(54) **VERFAHREN UND SYSTEM ZUR REGISTERHALTIGEN VERARBEITUNG VON DRUCKDATEN**
METHOD AND SYSTEM FOR PROCESSING PRINT DATA, WHILST RETAINING TAB ALIGNMENT
PROCEDE ET SYSTEME POUR TRAITER DES DONNEES D'IMPRESSION AVEC UN REPERAGE

(30) Priorität: 11.04.2000 DE 10017928
(43) Veröffentlichungstag der Anmeldung: 08.01.2003
(73) Patentinhaber: Océ Printing Systems GmbH, 85586 Poing (DE)
(72) Erfinder: SANDHAUS, Christoph, 80339 München (DE)
(74) Vertreter: Schaumburg, Thoenes, Thurn, Landskron Patentanwälte
(86) Internationale Anmeldenummer: PCT/EP2001/004114
(87) Internationale Veröffentlichungsnummer: WO 2001/077806

(56) Entgegenhaltungen:
- US-A- 5 675 753
- US-A- 5 852 442

## Beschreibung

Die Erfindung betrifft ein Verfahren und ein System zur Verarbeitung von Druckdaten. Sie betrifft insbesondere Systeme zur Verarbeitung größerer Druckaufträge, bei denen ein Druckauftrag eine Vielzahl von Dokumenten und/oder Seiten umfaßt. Sie ist daher in Druckproduktionsumgebungen, wie sie in größeren Rechenzentren auftreten oder auch im sog. "Printing on Demand" (PoD)-Markt zur Anwendung geeignet. Derartige Druckproduktionssysteme sind beispielsweise in der Veröffentlichung "Das Druckerbuch", herausgegeben von Dr. Gerd Goldmann, Océ Printing Systems GmbH, Ausgabe 4a, Mai 1999 (ISBN 3-00-001019-x) auf den Seiten 12-1 bis 12-17 beschrieben. In dieser Veröffentlichung ist auf den Seiten 12-9 bis 12-11 ein sog. Print-Job-Manager beschrieben, mit dem Druckaufträge (Job tickets) in einem an ein Computernetz angebundenen, beliebigen Computer (Client PC) erzeugt werden können und die so erzeugten Druckaufträge an eine Systemkomponente (Order Distribution System) zur Weiterverarbeitung und dem letztlichen Ausdruck übertragen werden können.

Im Zuge der Bearbeitung eines Druckauftrages (Job), der dem eigentlichen Druckvorgang auf einem Druckgerät vorausgeht, ist es vielfach gewünscht, das Druckergebnis vorab zu kontrollieren (sog. Preview). Aus der US-A-5,963,641 ist ein diesem Wunsch entsprechendes Verfahren zur Verarbeitung von Druckdaten bekannt.

In netzwerk-basierten Druckproduktionsumgebungen, bei denen eine Vielzahl von Anwenderterminals (Client-PCs) an einem gemeinsamen Netz angeschlossen sind sowie ein oder mehrere Druckserver, die von den Anwendern oder einem Host-Drucker erzeugten Druckdaten verwalten und an einen oder mehrere Hochleistungsdrucker weiterleiten, wird die Preview-Funktion besonders wichtig. Dies gilt insbesondere für Druckdatenströme, bei denen die Druckdaten aus mehreren Datenquellen, beispielsweise aus einem variablen Datenstrom und darin einzubindende, statische Ressourcendaten besteht. Beispiele derartiger Datenströme sind der sog. Advanced-Function-Pre-sentation-Data-Stream (AFPDS) oder der Mixed-Object-Documents-Contents-Architecture-Datenstrom (MO:DCA).

Der AFPDS-Datenstrom sowie ein hierfür in geeigneter Bildbetrachter sind beispielsweise in der Dokumentation Nr. S544-5285-00 der Firma "International Business Machines Corporation" (IBM) mit dem Titel "AFP Convertion and Index Facility (ACIF) Users Guide" beschrieben. Der MO:DCA-Datenstrom ist beispielsweise im IBM-Dokument Nr. SC31-6802-04 mit dem Titel "Mixed Object Document Content Architecture Reference" beschrieben.

In Druckprozessen werden zunehmend vernetzte Geräte eingesetzt und die Geräte durch Standard-Computerprogramme wie z.B. an sich bekannte Browserprogramme angesteuert oder überwacht. Derartige Internet-Browser sind z.B. die unter dem Betriebssystem Windows betriebenden Microsoft Internet Explorer®, der Netscape Navigator® oder der auch unter dem Betriebssystem Linux einsetzbare Browser Opera. Derartige Browser-Programme gehören vielfach zur Standardausrüstung von Personal Computern und sind somit an nahezu jedem Personal Computer neuerer Bauart verfügbar.

Der Netscape Navigator-Browser unterstützt eine in der Programmiersprache JavaScript programmierbare, sogenannte Layertechnik. Mit dem Objekt layers, das in der Java-Script®-Objekthierarchie unterhalb des document-Objekts liegt, besteht dabei die Möglichkeit, Zugriff auf alle Layer, die in einer HTML-Datei definiert sind, zu erhalten.

Ein neues Layer-Objekt wird automatisch erzeugt, wenn das Browserpogramm einen Layer in der HTML-Datei vorfindet.

Mit JavaScript® können Layers auf verschiedene Arten angesprochen werden, beispielsweise mit den Befehlen
"document.layers[#].Eigenschaft = Wert"
"document.layers[#].Methode()"
"Farbe = document.layers[0].bgColor"
"document.LayerName.Eigenschaft =Wert"
"document.LayerName.Methode()" und
"Farbe = document.Kopfbereich.bgColor"

Ein Layer kann dabei mit einer Indexnummer angesprochen und "document.layers" angegeben werden. Dahinter steht in eckigen Klammern, der wievielte Layer in der Datei aufgerufen werden soll. Jeder Layer, der in HTML mit dem <layer>-Tag oder mit dem <ilayer>-Tag notiert wurde, zählt. Die Layers können auch mit "document.LayerName" angesprochen werden und der Name angegeben werden, der bei der Definition der Grafik im einleitenden <layer>/<ilayer>-Tag im Attribut "name" angegeben wurde.

Weitere Einzelheiten zu dieser Layer-Technik sind z.B. in der Internetseite http://www.teamone.de/selfaktuell/ und in dem Buch "SELFHTML: Version 7.0 vom 27.04.1998" des Autors Stefan Münz beschrieben, das über die o.g. Internetadresse bezogen werden kann.

Aus der US-A-5,852,442 ist ein computerunterstütztes Zeichensystem (CAD System) bekannt, bei dem dreidimensionale Objekte mittels eines Fadenkreuzes am Bildschirm konstruiert werden können.

Bei der Verarbeitung von Druckaufträgen (Druckjobs) wird bei PoD-Anwendungen, insbesondere bei der Erzeugung von gebundenen Broschüren, gefordert, daß aufeinanderfolgende Seiten eines Dokuments passergenau gedruckt werden.

Es ist Aufgabe der Erfindung, ein Verfahren und ein System bereitzustellen, mit dem ein seitenweise passergenauer Druck ermöglicht wird.

Diese Aufgabe wird durch die in den unabhängigen Ansprüchen angegebene Erfindung gelöst. Vorteilhafte Ausführungsformen der Erfindung sind Gegenstand der Unteransprüche.

Erfindungsgemäß werden die zu verarbeitenden Druckdaten eines Druckauftrages vor dem Drucken auf einer Anzeigevorrichtung angezeigt. Die Druckdaten werden dabei zusammen mit einem Prüfmittel angezeigt, das an der Anzeigevorrichtung verschiebbar ist. Die Anzeige erfolgt dabei mit einem Browser-Programm wie z.B. Netscape Navigator, der die o.g. Layertechnik unterstützt. Die Erfindung kann somit in vorteilhafter Weise ohne größeren Aufwand in breitem Umfang genutzt werden.

In einem bevorzugten Ausführungsbeispiel der Erfindung liegen die Druckdaten bereits in einem gerasterten Druckdatenformat wie z.B. MO:DCA, TIF, JPG oder IOCA vor, in welchem sie später einem Druckgerät zum Drucken zugeführt werden. Sowohl diese Druckdaten als auch das Prüfmittel im Browser werden insbesondere als transparente Schichten (Layer) in einem Browser verarbeitet. Die Erfindung beruht auf der Erkenntnis, daß mit derartigen Layers dynamische Elemente in Browsern erzeugt werden können und daß derartige Elemente als Prüfmittel bei der Verarbeitung von Druckdaten verwendet werden können.

Das Prüfmittel ist insbesondere ein Fadenkreuz, das zwei entlang senkrecht zueinander stehende Achsen angeordneter Linien aufweist, die unabhängig voneinander jeweils parallel zur anderen Achse dynamisch verschiebbar sind und deren Positionen entlang der jeweils anderen Achse jeweils unabhängig voneinander fixierbar sind. Jede der beiden Linien stellt somit ein Teilelement des Prüfmittels (Fadenkreuzes) dar. Dabei ist es vorteilhaft, wenn jedes dieser Teilelemente im Browser als separate Schicht (Layer) verarbeitet wird. Die Linien des Fadenkreuzes werden insbesondere in einer von den übrigen Anzeigeflächen hervorgehobenen graphischen Darstellungsweise, z.B. farbig (rot), angezeigt.

Durch die Erfindung ist es insbesondere möglich, die Druckdaten eines Druckauftrages (Job), der in mehrere Seiten eingeteilt ist, seitenweise und auch innerhalb einer Seite hinsichtlich ihrer Passergenauigkeit bzw. Registerhaltigkeit zu überprüfen. Dazu wird das Prüfmittel (Fadenkreuz) an einer durch den Rand der angezeigten Druckdaten vorgegebenen Position positioniert und fixiert. Dann wird die nächste bzw. die nachfolgenden Seiten zur Anzeige gebracht und deren Position relativ zum fixierten Prüfmittel festgestellt. Ergibt sich eine Diskrepanz, z.B. ein Abstand zwischen dem fixierten Prüfmittel und den nachfolgenden Seiten, so können entsprechende Korrekturmaßnahmen eingeleitet werden, beispielsweise Korrekturwerte zur Verschiebung von Druckseiten eingegeben werden oder durch Lösen der Fixierung des Positioniermittels bzw. dynamischen Elementes und anschließender Neupositionierung des Prüfmittels entsprechend der nachfolgenden Seite ein Verschiebungswert (Shift) ermittelt werden, mit dem der spätere Druck gesteuert wird. Hierzu ist es insbesondere vorteilhaft, wenn die Position des Prüfmittels auf der Anzeigevorrichtung in einem Koordinatensystem automatisch erfaßt und die der Position entsprechenden Koordinatenwerte gespeichert werden.

Nachfolgend werden weitere Details und Ausführungsbeispiele der Erfindung anhand einiger Figuren näher beschrieben.

Es zeigen:
- Figur 1:: eine Druckproduktionsumgebung
- Figur 2:: eine Programmstruktur
- Figur 3:: ein Lade-Bildschirmmenü
- Figur 4:: ein Start-Bildschirmmenü
- Figur 5:: eine erste Dokumentenanzeige
- Figur 6:: eine zweite Dokumentenanzeige und
- Figur 7:: eine Systemstruktur.

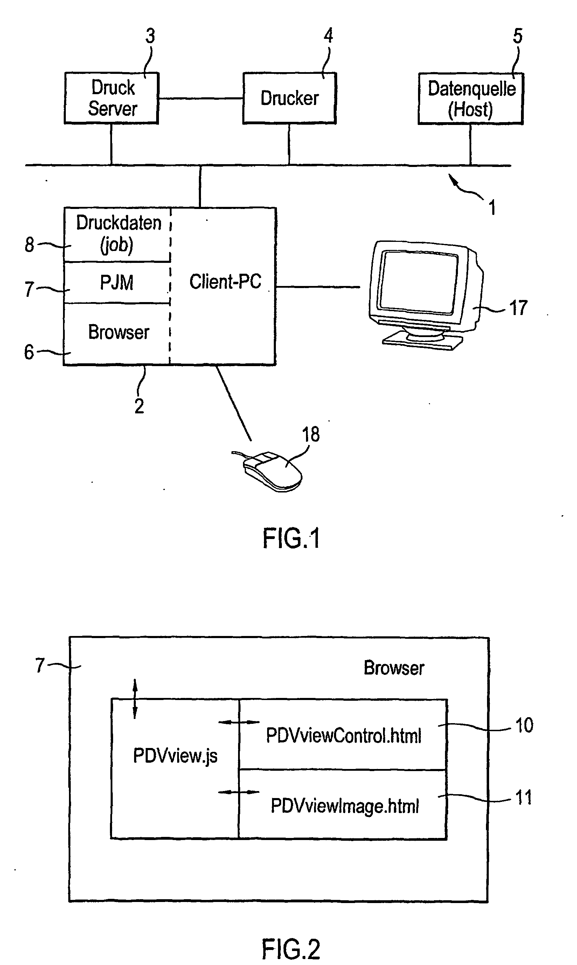

In Figur 1 ist eine Druckproduktionsumgebung dargestellt, in der einer von mehreren Anwender-Computern 2, ein Druckserver 3, ein Druckgerät 4 und eine separate Druckdatenquelle 5 (Host-Rechner) über ein Computernetzwerk, wie beispielsweise einem Local-Area-Netwerk (LAN) oder einem Wide-Area-Netwerk (WAN) verbunden sind. Der Anwender-Computer 2 kommuniziert insbesondere mit dem Druckserver 3 über eine spezielle Verbindungssoftware, wie beispielsweise der im oben genannten OCE-Druckerbuch auf den Seiten 12-1 bis 12-17 beschriebenen Software PRISMA + POD, die unter dem System PRISMA PRO abläuft.

Auf dem Anwender-PC 2 ist dazu unter anderem eine Browser-Software 6 (Netscape Communicator) installiert.

Die Browser-Software 6 kommuniziert dabei mit dem Print-Job-Manager 7, der PRISMA + POD-Software.

In einem weiteren Speicherbereich 8 des Anwender-Computers 2 können Druckdaten zwischengespeichert werden, die durch den Print-Job-Manager 7 vom Druckserver 3 oder dem Host-Computer 5 abgerufen wurden.

Der Anwender-Computer 2 umfaßt außerdem einen Bildschirm 7 sowie eine zur Eingabesteuerung verwendete Mouse 8.

In Figur 2 ist gezeigt, wie die Browser-Software 7 mit einer unter Java-Script® programmierten Software "PDVView.js" 9 zusammenarbeitet, deren Listing am Ende der Beschreibung als Anhang 1 angehängt ist.

Dieses Java-Script-Programm 9 greift zum einen auf den HTML-Code "PDVViewControl.Html" 10 sowie auf den HTML-Code "PDVViewImage.Html" 11 zurück, die als Anhängen 2 und 3 angehängt sind. HTML bedeutet Hyper Text Markup Language und in den Listings sind Fadenkreuz-Bezüge als "Grid" definiert; die auf Layer-bezogenen Definitionen und Funktionen sind ebenfalls klar erkennbar.

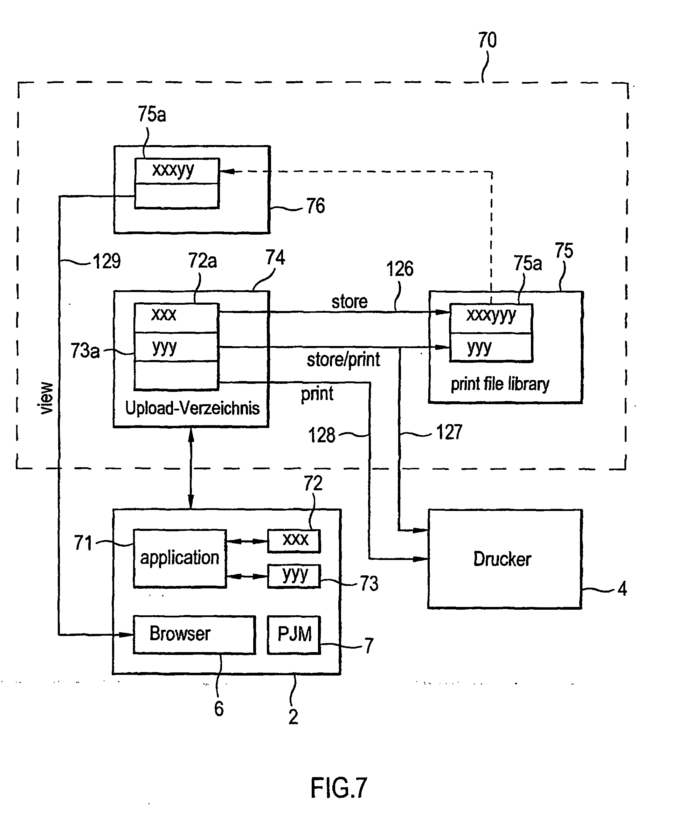

In Figur 7 sind wesentliche Systemkomponenten und der entsprechende Ablauf veranschaulicht, die im Zuge der Erstellung, der Weiterverarbeitung und des Ausdruckens eines Dokuments benutzt werden.

Das im Client-PC 2 mittels eines Anwenderprogramms 71 wie beispielsweise eines Textverarbeitungsprogramms erzeugten Objekte 72, 73 können dabei in eine Speicherdomäne 70, welche beispielsweise im Druckserver 3 (Figur 1) oder auch über mehrere Computer des Netzwerkes 1 verteilt sind, durch einen Upload-Speichervorgang vom Client-PC 2 in den entsprechenden Speicher-Computer übertragen und dort abgespeichert werden. Die Speicherdomäne 70 umfaßt dazu ein oder mehrere Upload-Verzeichnisse 74 sowie eine Bibliothek für Druckdateien 75 (Print File Library), in der bereits fertiggestellte Druckaufträge abgespeichert werden. Die Speicherung erfolgt dabei insbesondere auf einem Permanentspeicher wie einer Festplatte des Druckservers 3.

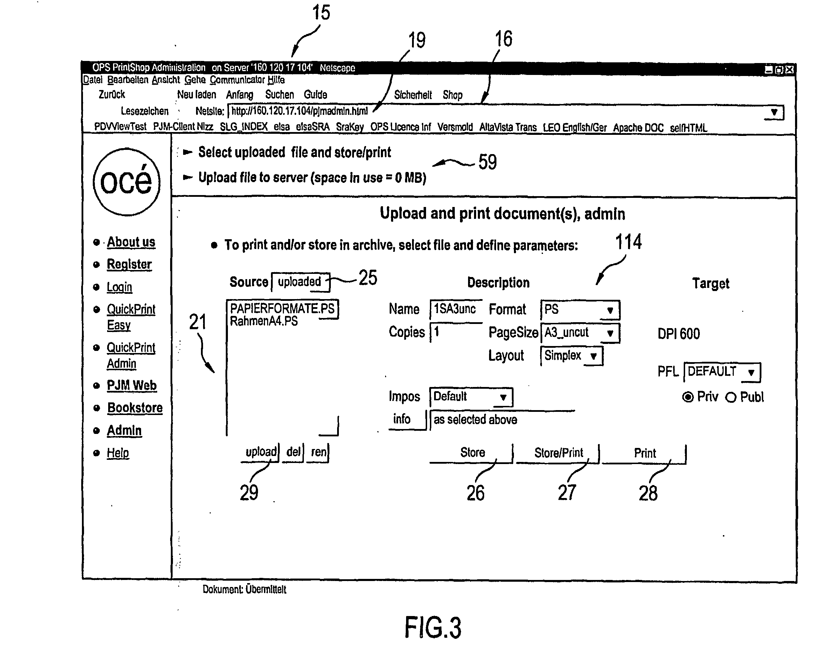

Nachdem die im Programm 71 erstellten Dateien 72, 73 in das Upload-Verzeichnis übernommen wurden und dort in den Speicherbereichen 72a, 73a abgelegt wurden, können diese über die Print Job Manager-Software 7 zu einem kompletten Druckauftrag verbunden und als Jobdatei 75a durch Betätigung der Taste 26 (siehe Figur 3) in der Print File Library 75 abgespeichert werden. Dies erfolgt in einem Vorgang 126.

Alternativ zum Abspeichern 126 kann eine im Upload-Verzeichnis 74 enthaltene Datei auch im Vorgang 127 durch Betätigen der Schaltfläche 27 sowohl in der Print File Library 75 gespeichert als auch dem Drucker 4 zum Ausdrukken zugeführt werden. Über Schaltfläche 28 (siehe Figur 3) ist außerdem das Drucken aus dem Upload-Verzeichnis 74 entsprechend dem Verfahrensablauf 128 möglich.

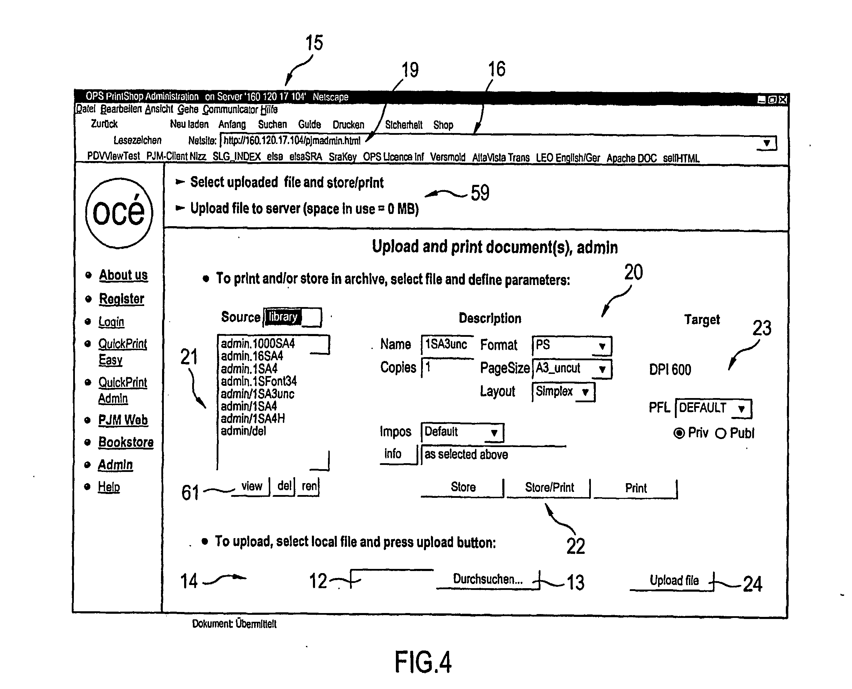

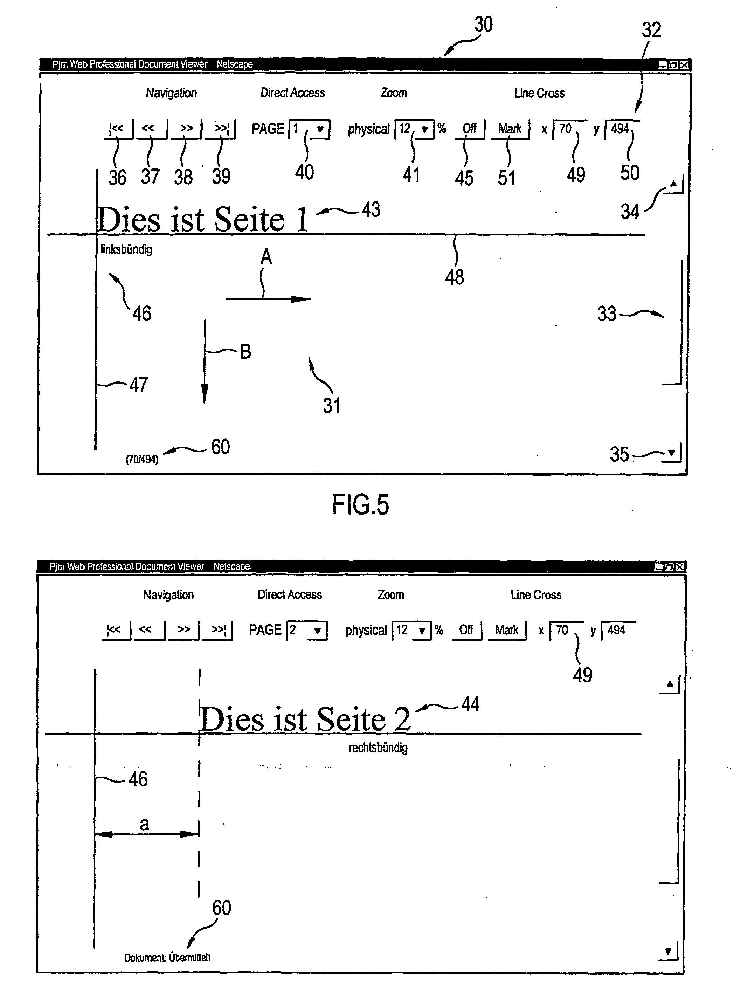

Eine in der Bibliothek 75 (Print File Library) gespeicherte Dokumentendatei 75a kann durch Betätigen der Schaltfläche 61 (siehe Figur 4) in einen Übertragungsvorgang 129 an den Client-PC 2 übertragen werden. Vor der Übertragung wird überprüft, ob die Datei 75a in einem gerasterten, vom Browser 6 anzeigbaren Datenformat wie IOCA, TIF, GIF oder JPG vorliegt. Falls dies nicht der Fall ist, z.B. wenn die in der Bibliothek 75 abgespeicherte Datei in einem AFP, PCL oder Postscript-Format codiert ist, wird sie mit einem Rastermodul 76 in ein vorgegebenes gerastertes Format wie z.B. JPG umgesetzt, bevor sie an den Client-PC 5 übertragen oder durch den Browser zur Anzeige gebracht werden kann. Die derart übertragene bzw. konvertierte Datei wird dann mit dem Browser 6 zur Anzeige gebracht (siehe Figuren 5 und 6).

Zum Drucken gemäß den Vorgängen 127 und 128 werden die vom Upload-Verzeichnis 24 an den Drucker 4 übertragenen Daten in einem Datenformat bereitgestellt, welches an die vom Drucker verarbeitbaren Datenformate angepaßt ist, beispielsweise im Format AFP, PCL oder Postscript.

In Figur 3 ist ein Anzeige-Fenster 15 dargestellt, welches nach Aufrufen der Browser-Software 6 und der Print-Job-Manager-(PJM) Software 7 auf dem Bildschirm 17 des Anwendercomputers 2 angezeigt wird. Das Fenster 15 hat dabei im oberen Bereich 16 die typischen Merkmale eines Internet-Browsers, nämlich die Netscape-Menüzeile mit Funktionen wie "Datei", "Bearbeiten" sowie "Neu laden", sowie die Angabe der aktuell aufgerufenen http-Netzwerk-Adresse im Feld 19.

Im Auswahlfeld 25 kann dabei ausgewählt werden, ob in der Auswahlliste 21 die im Upload-Verzeichnis 74 gespeicherten Dateien oder die in der Bibliothek 75 gespeicherten Dateien zur Anzeige gebracht werden. In dem in Figur 3 gezeigten Zustand sind in der Liste 21 die Dateien des Upload-Verzeichnisses 74 angezeigt.

Im Bereich 114 (Description) sind zum einen Eigenschaften einer im Upload-Bereich aktivierten Datei angegeben, z.B. ihr Format "PS" für eine Postscript-Datei. Zum anderen sind im Bereich 14 gewünschte Druckparameter angezeigt und auswählbar, z.B. die Zahl der Kopien (Copies) pro Ausdruck oder die Ausgabeart einseitiger/doppelseitiger Druck (simplex/duplex).

Mit den Schaltflächen 26, 27 und 28 läßt sich die Ausgabe in Datei (Store) und/oder die Ausgabe an einen Drucker (Print) starten.

In Figur 4 ist das Anzeigefenster 15 in einem Zustand gezeigt, der nach dem in Figur 3 gestarteten Ladevorgang erreicht ist. Im Feld 25 ist dabei durch die Angabe "library" angezeigt, daß in der Auswahlliste 21 das Verzeichnis der Bibliothek 75 angezeigt wird.

In einem Anzeigebereich 20 des aktuellen Dokumentes "Pjmadmin.html" können verschiedene Dokumente in einem Dokument-Auswahlfeld 21 ausgewählt werden. Im Bereich 22 werden typische Eigenschaften der aktuell ausgewählten Dokumente wie deren Name, deren Druckdatensprache, die Anzahl der Kopien, die Seitengröße, Layout-Angaben sowie Ausschieß-Parameter (Impositioning) dargestellt.

Im Bereich 23 werden typische Angaben hinterlegt, die druckerspezifisch für den Druckauftrag benötigt werden, wie z.B. die Auflösung.

Im Anzeigebereich 14 können lokale Dateien des Client-PCs 2 angezeigt und verwaltet werden. Mit der Schaltfläche 13 können dabei Druckdokumente im Permanentspeicher (Laufwerke) des Client-PCs 2 gesucht werden. Im Feld 12 kann der Name einer vorhandenen Datei zur Suche eingegeben weren. Mit der Schaltfläche 24 kann eine Datei des Client-PCs 2 auf den Druckserver 3 übertragen werden (Upload-Vorgang), so dass sie in dem Upload-Verzeichnis 74 erscheint.

In Figur 5 ist gezeigt, wie ein in den Browser (Netscape Navigator) geladenes Dokument angezeigt und die Anzeige mittels des Java-Script-Moduls "PDVView.js" 9 (Anhang 1) gesteuert wird. Das Dokument wird dabei bereichsweise, z.B. seitenweise, in einem Anzeigebereich 31 des Anzeigefensters 30 dargestellt. Diese Anzeige wird durch das Programm "PDVV-iewImage.html" 11 (Anhang 3) gesteuert.

Die derart geladenen Dateien (z.B. die Datei "Rahmen/A4.ps") stehen im Browser in einem gerasterten Format (JPG) zur Verfügung, wobei sichergestellt ist, daß die zur Anzeige gebrachten Informationen pixelweise identisch zu den Informationen ist, die beim Ausdruck derselben Datei im Druckbild entsteht.

In einem über dem Anzeigebereich 31 liegenden Anzeigebereich ist die viewer-spezifische Menüzeile 32 dargestellt. Die Anzeige im Dokument-Anzeigebereich 31 kann dabei über mehrere Steuerfunktionen verändert werden. Zum einen kann im Dokument über den Scroll-Balken 33 oder die dazugehörigen Pfeil-Tasten 34, 35 wie im Standard-Browser gewohnt eine Bewegung innerhalb des Dokumentes nach oben oder unten vollzogen werden.

Eine weitere Möglichkeit, die Anzeige des Dokumentes im Bereich 31 zu verändern, ist, mit den Pfeiltasten 36 (zum Beginn des Dokumentes), 37 (nach oben), 38 (nach unten) und 39 (zum Ende des Dokumentes) im Dokument zu wandern. Im Eingabefeld 40 kann des weiteren eine bestimmte Seitennummer eingegeben werden, um direkt zu einer bestimmten Seite zu gelangen. Im Feld 41 kann der Zoom-Faktor angegeben werden, mit dem das Dokument im Bereich 31 dargestellt wird.

Nach Drücken der Viewer-Schaltfläche 61 (Figur 4) wird im Browser 7 bzw. in dem Anzeige-Modul 9 (Viewer) das Anzeigefenster 30 mit der Menüzeile 32 und dem aktuell geladenen Dokument im Bereich 31 angezeigt. In Figur 5 ist dabei der Text 43 von Seite 1 des Dokumentes dargestellt, in Figur 6 ist der Text bzw. die Information der Seite 2 des aktuell geladenen Dokumentes angezeigt.

Durch einen Druck auf die Schaltfläche 45 kann innerhalb des Anzeigebereichs 31 das Fadenkreuz 46 wahlweise eingeblendet und ausgeblendet werden. Das Fadenkreuz 46 besteht dabei aus einer vertikalen Linie 47 und einer horizontalen Linie 48.

Beim erstmaligen Starten des Bildbetrachters (Viewer 9) ist das Fadenkreuz nicht sichtbar. Durch Betätigen der Schaltfläche 45 wird es eingeschalten (aktiviert) und erscheint sichtbar in der linken oberen Ecke des Anzeigebereichs 31. Diese Ecke definiert die Ursprungskoordinaten (X, Y) = (0, 0) innerhalb eines Koordinatensystems. Die aktuellen Koordinaten des Fadenkreuzes werden dabei in der Browser-Statuszeile 60 in zwei Anzeigefeldern 49 für die horizontale X-Koordinate und 50 für die vertikale Y-Koordinate angezeigt. Die Menüzeile 32 wird dabei durch das Programm "PDVViewControl.html" 10 (Anhang 2) bewirkt und gesteuert.

Mit der Markierungstaste 51 können die aktuellen Koordinaten des Fadenkreuzes festgehalten, gespeichert und in den Koordinatenfeldern 49, 50 zur Anzeige gebracht werden. Eine anschließende Bewegung des Fadenkreuzes in horizontaler oder vertikaler Richtung verändert die X- bzw. Y-Koordinatenwerte in den angezeigten Koordinaten-Anzeigefeldern 49, 50 nicht mehr, bis die Markierungstaste wieder gedrückt wird. Durch erneutes Drücken der Markierungstaste werden die gespeicherten X- bzw. Y-Koordinaten der aktuellen Fadenkreuz-Position wieder angezeigt.

Innerhalb des Anzeigefeldes 31 ist der Anzeigetext 43 des zu betrachtenden Dokuments, welches in einen ersten Layer eingebettet ist, zu sehen. Derartige Layer sind in einem Browser-Programmierumfeld Träger graphischer Informationen. Im Unterschied zu den graphischen Informationen an sich sind die Layer vorteilhafterweise in Browser-Umgebungen jedoch bewegbar. Durch das Einbetten der graphischen Informationen in den Layer sind die Informationen (Linien des Fadenkreuzes) innerhalb einer Browser-Anzeige bewegbar, indem im Browser der Layer bewegt wird. Damit werden innerhalb der Browser-Umgebung dynamische Elemente geschaffen, deren Position veränderbar ist.

In der vorliegenden Anwendung wird der erste Layer, in dem die graphischen Informationen des Dokumentes gespeichert sind, örtlich nicht verändert. Ein zweiter Layer, in dem die vertikale Linie 47 des Fadenkreuzes 46 gespeichert ist, kann jedoch innerhalb der Grenzen des Dokument-Anzeigebereichs 31 beliebig in horizontaler Richtung A verschoben werden. Genauso kann die zweite Linie 48 des Fadenkreuzes 46, die ebenfalls als graphische, ein Pixel breite Information in einem dritten Layer eingebettet ist, beliebig entlang Richtung B vertikal verschoben werden. Die Linie wird dabei aus einer Datei mit einem Pixel durch Streckung daregestellt.

Das Fadenkreuz 46 ist datentechnisch mit der Mouse 18 (Figur 1) gekoppelt und wird wie ein an sich bekannter Mousezeiger automatisch zusammen mit einer Mousebewegung innerhalb der Anzeigefläche 31 bewegt. Durch einen Mouseklick mit der linken Mousetaste kann das Fadenkreuz 46 von der Mouse entkoppelt werden und bleibt an der aktuellen Position innerhalb des Dokument-Anzeigebereichs stehen.

Die Momentanwerte innerhalb der X-Y-Koordinaten (horizontal, vertikal) des Fadenkreuzes 46 können durch Anwählen auf den Schaltknopf 51 in den dahinterliegenden Textfeldern 49, 50 angezeigt werden. In der Statusleiste 60 des Browsers ist die aktuelle Position des Fadenkreuzes sichtbar.

Das Fadenkreuz muß dazu sichtbar und fixiert sein. Wird das Fadenkreuz 46, nachdem es mit erneutem Mouseklick innerhalb des Anzeigefeldes 31 wieder beweglich bemacht wurde, danach wieder verschoben, so bleiben die angezeigten Werte in den Feldern 49, 50 erhalten. Die Koordinaten-Werte entsprechen einzelnen Pikselwerten auf den X-Y-Achsen.

Durch eine Eingabe der X- bzw. Y-Koordinaten in die Felder 49, 50 kann das Fadenkreuz direkt an die angegebene Koordinaten-Position positioniert werden.

Zur Überprüfung der Registerhaltigkeit aufeinanderfolgender Seiten ist es zweckmäßig, das Fadenkreuz an einer bestimmten Position, z.B. bei X = 70 und Y = 494, zu positionieren und dann über eine der Schaltflächen 36, 37, 38, 39 oder 40 einen Seitenwechsel vorzunehmen. Im Vergleich zwischen Figuren 5 und 6 ist dies z.B. mit den Seiten 1 und 2 durchgeführt, wobei deutlich zu sehen ist, daß die Seite 2 nicht registerhaltig zur Seite 1 positioniert ist. Der horizontale Abstand a zwischen den Zeilenbeginnen der Seiten 1 und 2 kann durch Verschieben des Fadenkreuzes 46 zum Beginn des Textes der Seite 2 festgestellt werden und die Anzahl der Pixel direkt im Feld 49 abgelesen werden. Der damit erzielte, pixelweise gemessene Register-Korrekturwert (Differenz der beiden Positionen von Seiten 1 und 2) kann dann automatisch oder durch Übertragung auf ein anderes System, beispielsweise in die Steuerung des Drukkers 4, so korrigiert werden, daß im letztendlichen Ausdruck die Registerhaltigkeit wiederhergestellt ist.

Grundlage zur Darstellung des Fadenkreuzes 46 ist zum einen die oben genannte Layer-Technik und zum anderen zwei Bilddateien mit jeweils einem speziell gekennzeichneten, bestehend aus einem rot farbigen Pixel für die beiden Linien 47, 48. Durch Strecken in jeweils horizontaler bzw. vertikaler Richtung entstehen dabei die Linien 47, 48, welche jeweils bis zu den Rändern des Anzeigebereiches 31 reichen.

Im Übergang von Figur 5 zu Figur 6 ist insbesondere zu erkennen, daß die Position des Fadenkreuzes, d.h. die Koordinaten X, Y durch einen Seitenwechsel nicht verändert wird. Dadurch kann bei schnellem Scrollen (Seitenwechsel) vom Benutzer sehr schnell erkannt werden, ob eine Verschiebung hinsichtlich der Registerhaltigkeit in aufeinanderfolgenden oder auch weit voneinander entfernt liegenden Seiten vorliegt.

Andererseits ist das Fadenkreuz innerhalb des Bereiches 31 dynamisch verschiebbar. Derartige dynamische Elemente können in Web-Browsern wie dem Netscape Communicator insbesondere durch die Layer-Technik realisiert werden.

Es wurden Ausführungsbeispiele der Erfindung beschrieben. Dabei ist klar, daß vom Fachmann jederzeit Weiterentwicklungen der Erfindung angegeben werden können. Beispielsweise könnten statt den Fadenkreuzlinien auch gestrichelte Linien oder andere Symbole dargestellt werden. Der Vorgang der Prüfung der Registerhaltigkeit könnte auch automatisiert werden, so daß das Fadenkreuz oder die Registerlinien automatisch verändert, die Korrekturwerte automatisch berechnet und an eine übergeordnete Prozeßsteuerung übergeben werden.

Die Erfindung ist sowohl als Computerprogramm als auch als Computerprogrammprodukt oder in einem Computer integriert zu verwirklichen und insbesondere in Drucksystemen mit angeschlossenen Druckservern besonders vorteilhaft. Sie kann dabei auf einem Server, einem Client-PC, einem Drucker oder einem anderen in einem Datennetz eingebundenen Computer ablaufen. Entsprechende Programmdateien können auf einem Datenträger abgespeichert oder über LAN- und WAN Netze wie das Internet verbreitet werden.

### Bezugszeichenliste

- 1: Netzwerk (LAN, WAN)
- 2: Anwender-Computer
- 3: Druck-Server
- 4: Druckgerät
- 5: Host-Rechner
- 6: Browser-Software
- 7: Print Job Manager-Software
- 8: Druckdaten
- 9: Programm "PDVView.js"
- 10: Programm "PDVViewControl.html"
- 11: Programm "PDVViewImage.html"
- 12: Eingabefeld für lokale Dateien
- 13: Schaltfläche zum Durchsuchen des lokalen PCs
- 14: Anzeigebereich für lokale Dateien
- 15: Netscape-Fenster
- 16: Netscape-Menüzeile
- 17: Bildschirm
- 18: Mouse
- 19: Aktuelle WWW-Adresse
- 20: Upload-Anzeigefeld
- 21: Dokument-Auswahlfeld
- 22: Dokument-Beschreibung
- 23: Druckerspezifische Dokument-Angaben
- 24: Schaltfläche
- 25: Source-Feld
- 26: Speicher-Schaltfläche
- 27: Speicher- und Druck-Schaltfläche
- 28: Druck-Schaltfläche
- 29: Upload-Taste
- 30: Anzeigefenster
- 31: Dokument-Anzeigebereich
- 32: Menüzeile
- 33: Scroll-Balken
- 34: Pfeiltaste
- 35: Pfeiltaste
- 36: Zu Seite 1
- 37: Pfeiltaste (eine Seite zurück)
- 38: Pfeiltaste (eine Seite vor)
- 39: Zum Ende des Dokumentes (letzte Seite)
- 40: Seiteneingabefeld (Seiten-Direktwahl)
- 41: Zoom-Funktion
- 42: Fadenkreuz-Taste
- 43: Text der Seite 1
- 44: Text der Seite 2
- 45: Fadenkreuz-Schaltfläche
- 46: Fadenkreuz
- 47: vertikale Linie
- 48: horizontale Linie
- 49: Anzeigefeld für X-Koordinate
- 50: Anzeigefeld für Y-Koordinate
- 51: Markierungs-Taste

- 59: PIM-Server-Statuszeile
- 60: Browser-Statuszeile
- 61: View-Taste

- 70: Speicherdomäne
- 71: Anwenderprogramm
- 72: erstes Objekt
- 73: zweites Objekt
- 74: Upload-Verzeichnis
- 75: Print File Library
- 76: Rastermodul

- 114: Anzeigebereich für Eigenschaften des Jobs
- 126: Speichern nach Betätigen der Schaltfläche 26
- 127 27: Speichern und Drucken nach Betätigen der Schaltfläche
- 128: Drucken nach Betätigen der Schaltfläche 28
- 129: Übertragen der gerasterten Druckdaten nach Betätigen der Schaltfläche 61

## Patentansprüche

1. Verfahren zur Verarbeitung von Druckdaten eines Druckauftrages, der in mehrere Seiten eingeteilt ist, bei dem die Druckdaten zur seitenweisen Überprüfung hinsichtlich ihrer Registerhaltigkeit vor dem Drucken auf einer Anzeigevorrichtung (17) angezeigt werden, wobei die Druckdaten einer ersten Seite zusammen mit einem an der Anzeigevorrichtung (17) verschiebbaren Prüfmittel (46) derart angezeigt werden, dass das Prüfmittel (46) an einer durch den Rand der angezeigten Druckdaten vorgegebenen Position positionierbar und insbesondere fixierbar ist, dann die Druckdaten einer nachfolgenden Seite zur Anzeige gebracht werden und deren Position relativ zum Prüfmittel (46) festgestellt wird.

2. Verfahren nach Anspruch 1, wobei die Druckdaten in einem gerasterten Format vorliegen, in welchem sie einem Druckgerät zum Drucken zugeführt werden.

3. Verfahren nach einem der Ansprüche 1 oder 2, wobei die Druckdaten mittels eines Browsers (6) angezeigt werden.

4. Verfahren nach einem der vorhergehenden Ansprüche, wobei die Position des Prüfmittels (46) auf der Anzeigevorrichtung (17) fixierbar ist.

5. Verfahren nach einem der vorhergehenden Ansprüche, wobei das Prüfmittel (46) eine Linie umfasst.

6. Verfahren nach Anspruch 5, wobei das Prüfmittel (46) ein Fadenkreuz ist und die beiden Achsen (47, 48) des Fadenkreuzes (46) unabhängig voneinander auf der Anzeigevorrichtung (17) verschiebbar sind.

7. Verfahren nach Anspruch 6, wobei die Positionen der beiden Achsen (46, 47) des Fadenkreuzes (46) unabhängig voneinander auf der Anzeigevorrichtung (17) fixierbar sind.

8. Verfahren nach einem der vorhergehenden Ansprüche, wobei das Prüfmittel (46) mit einer Eingabevorrichtung (18) auf der Anzeigevorrichtung (17) verschoben und/oder fixiert wird.

9. Verfahren nach Anspruch 8, wobei die Druckdaten in einem Dokumenten-Anzeigebereich (31) angezeigt werden und dass das Prüfmittel (46) derart von der Eingabevorrichtung (18) entkoppelbar ist, dass es trotz einer Verschiebebewegung der Eingabevorrichtung (18) an der aktuellen Position innerhalb des Dokumenten-Anzeigebereichs (31) stehen bleibt.

10. Verfahren nach einem der vorhergehenden Ansprüche, wobei die Position des Prüfmittels (46) auf der Anzeigevorrichtung (17) in einem Koordinatensystem automatisch erfasst und die der Position entsprechenden Koordinatenwerte (x,y) gespeichert werden.

11. Verfahren nach einem der vorhergehenden Ansprüche, wobei die Druckdaten in einer ersten transparenten Schicht verarbeitet werden und das Prüfmittel (46) in mindestens einer zweiten transparenten Schicht.

12. Verfahren nach Anspruch 11, wobei das Prüfmittel (46) ein erstes Teilelement (48) und ein zweites Teilelement (47) umfaßt und jedes Teilelement in einer separaten Schicht verarbeitet wird.

13. Verfahren nach einem der vorhergehenden Ansprüche, wobei die Anzeige des Prüfmittels (46) abschaltbar ist.

14. Verfahren nach einem der vorhergehenden Ansprüche, wobei mit einer auf der Anzeigevorrichtung (17) angezeigten Seitenschaltfläche (40) vorbestimmte Seiten eines den Druckdaten entsprechenden Dokuments zur Anzeige gebracht werden können.

15. Verfahren nach einem der vorhergehenden Ansprüche, wobei das Prüfmittel (46) mittels Werten, die an einer auf der Anzeigevorrichtung (17) angezeigten Positionsschaltfläche (51) eingegeben oder ausgewählt werden, an einer vorbestimmten Position zur Anzeige gebracht wird.

16. Computersoftware, die beim Laden auf einem Computer (2) einen Verfahrensablauf nach einem der Ansprüche 1 bis 15 bewirkt.

17. Computersystem, das einen Verfahrensablauf nach einem der Ansprüche 1 bis 15 bewirkt.

18. Drucksystem umfassend ein Computersystem nach Anspruch 17.

## Claims

1. Method of processing print data of a print job divided into a plurality of pages, wherein, before printing, the print data are displayed on a display device (17) for page-by-page checking with regard to their register accuracy, the print data of a first page being displayed together with a check means (46) displaceable on the display device (17) such that the check means (46) can be positioned and in particular fixed at a position predetermined by the edge of the displayed print data, then the print data of a following page being displayed and their position relative to the check means (46) being determined.

2. The method according to claim 1, wherein the print data are present in a rastered format in which they are supplied to a printer device for printing.

3. The method according to one of the claims 1 or 2, wherein the print data are displayed using a browser (6).

4. The method according to one of the preceding claims, wherein the position of the check means (46) can be fixed on the display device (17).

5. The method according to one of the preceding claims, wherein the check means (46) comprises a line.

6. The method according to claim 5, wherein the check means (46) is a reticule and the two axes (47, 48) of the reticule (46) can be displaced independently of one another on the display device (17).

7. The method according to claim 6, wherein the positions of the two axes (46, 47) of the reticule (46) can be fixed independently of one another on the display device (17).

8. The method according to one of the preceding claims, wherein the check means (46) is displaced and/or fixed on the display device (17) with an input device (18).

9. The method according to claim 8, wherein the print data are displayed in a document display region (31) and in that the check means (46) can be decoupled from the input device (18) such that despite a displacement of the input device (18) it remains at the current position within the document display region (31).

10. The method according to one of the preceding claims, wherein the position of the check means (46) on the display device (17) is automatically acquired in a coordinate system and the coordinate values (x, y) corresponding to the position are stored.

11. The method according to one of the preceding claims, wherein the print data are processed in a first transparent layer and the check means (46) is processed in at least one second transparent layer.

12. The method according to claim 11, wherein the check means (46) comprises a first sub-element (48) and a second sub-element (47) and each sub-element is processed in a separate layer.

13. The method according to one of the preceding claims, wherein the display of the check means (46) can be turned off.

14. The method according to one of the preceding claims, wherein predetermined pages of a document corresponding to the print data can be displayed by means of a page button (40) displayed on the display means (17).

15. The method according to one of the preceding claims, wherein the check means (46) is displayed at a predetermined position by means of values that are input or selected at a position button (51) displayed on the display device (17).

16. Computer software, which, when loaded on a computer (2), effects a course of process according to one of the claims 1 to 15.

17. Computer system, which effects a course of process according to one of the claims 1 to 15.

18. Printing system, comprising a computer system according to claim 17.

## Revendications

1. Procédé de traitement de données d'impression d'une tâche d'impression qui est divisée en plusieurs pages, dans lequel les données d'impression sont affichées sur un dispositif d'affichage (17) avant l'impression, en vue de vérifier page par page leur repérage, les données d'impression d'une première page étant affichées conjointement avec un moyen de vérification (46) déplaçable sur le dispositif d'affichage (17), de façon à pouvoir positionner et en particulier fixer le moyen de vérification (46) à une première position prédéterminée par le bord des données d'impression affichées, puis de façon à afficher les données d'impression d'une page suivante et à déterminer leur position par rapport au moyen de vérification (46).

2. Procédé selon la revendication 1, dans lequel les données d'impression sont dans un format tramé dans lequel elles sont amenées à un appareil d'impression en vue de l'impression.

3. Procédé selon l'une des revendications 1 ou 2, dans lequel les données d'impression sont affichées au moyen d'un navigateur (6).

4. Procédé selon l'une des revendications précédentes, dans lequel la position du moyen de vérification (46) peut être fixée sur le dispositif d'affichage (17).

5. Procédé selon l'une des revendications précédentes, dans lequel le moyen de vérification (46) comporte une ligne.

6. Procédé selon la revendication 5, dans lequel le moyen de vérification (46) est un réticule à croisillon, et les deux axes (47, 48) du réticule à croisillon (46) sont déplaçables indépendamment l'un de l'autre sur le dispositif d'affichage (17).

7. Procédé selon la revendication 6, dans lequel les positions des deux axes (46, 47) du réticule à croisillon (46) peuvent être fixées indépendamment l'une de l'autre sur le dispositif d'affichage (17).

8. Procédé selon l'une des revendications précédentes, dans lequel le moyen de vérification (46) est déplacé et/ou fixé au moyen d'un dispositif d'entrée (18) sur le dispositif d'affichage (17).

9. Procédé selon la revendication 8, dans lequel les données d'impression sont affichées dans une zone d'affichage de document (31), et en ce que le moyen de vérification (46) peut être découplé du dispositif d'entrée (18) de façon à rester à la position actuelle à l'intérieur de la zone d'affichage de document (31) en dépit d'un mouvement de déplacement du dispositif d'entrée (18).

10. Procédé selon l'une des revendications précédentes, dans lequel la position du moyen de vérification (46) est détectée automatiquement sur le dispositif d'affichage (17) dans un système de coordonnées, et les valeurs de coordonnées (x, y), correspondant à la position, sont mémorisées.

11. Procédé selon l'une des revendications précédentes, dans lequel les données d'impression sont traitées dans une première couche transparente, et le moyen de vérification (46) est traité dans au moins une deuxième couche transparente.

12. Procédé selon la revendication 11, dans lequel le moyen de vérification (46) comporte un premier élément partiel (48) et un deuxième élément partiel (47), et chaque élément partiel est traité dans une couche séparée.

13. Procédé selon l'une des revendications précédentes, dans lequel la présentation du moyen de vérification (46) peut être arrêtée.

14. Procédé selon l'une des revendications précédentes, dans lequel les pages prédéterminées d'un document correspondant aux données d'impression peuvent être affichées avec un sélecteur de page (40) affiché sur le dispositif d'affichage (17).

15. Procédé selon l'une des revendications précédentes, dans lequel le moyen de vérification (46) est affiché à une position prédéterminée au moyen de valeurs qui sont entrées ou sélectionnées sur un sélecteur de position (51) affiché sur le dispositif d'affichage (17).

16. Logiciel qui commande lors du chargement sur un ordinateur (2) le déroulement d'un procédé selon l'une des revendications 1 à 15.

17. Système informatique qui commande le déroulement d'un procédé selon l'une des revendications 1 à 15.

18. Système d'impression comportant un système informatique selon la revendication 17.
